# EUROPEAN PATENT APPLICATION

(11) **EP 3 901 842 A1**
(43) Date of publication of application: **27.10.2021**
(21) Application number: 20170772.6
(22) Date of filing: 22.04.2020
(51) Int. Cl.: G06Q 10/00

(54) **SUPPORTING A USER IN INITIATING OR STOPPING PAYMENTS FOR A PARKED VEHICLE**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: LINDBERG NILSSON, Erik, 417 47 GÖTEBORG (SE); JOHANSSON, Jonathan, 417 14 GÖTEBORG (SE)
(74) Representative: Zacco Sweden AB

(57) **Abstract**

A method for supporting a user in initiating or stopping one or more payments for a parked vehicle at one or more locations is disclosed. The method comprises determining (101) that a user activity indicative of the one or more payments for the parked vehicle is being performed during one or more time intervals where the one or more payments for the parked vehicle are to be initiated or stopped by: obtaining (101a) information relating to the user activity from one or more apps likely related to parking in a mobile communication device during the one or more time intervals, and/or monitoring (101b) operations likely related to parking generated by the user activity in the mobile communication device during the one or more time intervals.

Corresponding computer program product, apparatus, and mobile communication device are also disclosed.

## Description

### TECHNICAL FIELD

The present disclosure relates generally to the field of payments for a parked vehicle. More particularly, it relates to supporting a user in initiating or stopping one or more payments for a parked vehicle.

### BACKGROUND

When leaving a parked vehicle at a location, it is easy to forget to pay payment for parking.

When arriving at a parked vehicle at a location, it is easy to forget to stop ongoing payment for parking.

Payments for parking are commonly initiated or stopped with a mobile communication device.

A first drawback of current approaches for overcoming forgetting to either pay for parking or stop paying for ongoing payment for parking is that an Application Programming Interface (API) for third parties is required for determining missing or ongoing payments for parking.

A second drawback of current approaches for overcoming forgetting to either pay for parking or stop paying for ongoing payment for parking is that customized setups with third parties are required for determining missing or ongoing payments for parking.

Therefore, there is a need for alternative approaches for supporting a user in initiating or stopping payments for a parked vehicle.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other drawbacks.

According to a first aspect, this is achieved by a method for for supporting a user in initiating or stopping one or more payments for a parked vehicle at one or more locations.

The method comprises determining that a user activity indicative of the one or more payments for the parked vehicle is being performed during one or more time intervals where the one or more payments for the parked vehicle are to be initiated or stopped by obtaining information relating to the user activity from one or more apps likely related to parking in a mobile communication device during the one or more time intervals, and/or by monitoring operations likely related to parking generated by the user activity in the mobile communication device during the one or more time intervals.

An advantage of some embodiments is that alternative approaches for supporting a user in initiating or stopping payments for a parked vehicle are provided.

Yet an advantage is that a user is supported by one or more reminders to initiate, i.e., turn on or start, payments for a parked vehicle.

Yet an advantage of some embodiments is that the need for an API for determining missing or ongoing payments for parking is removed.

Yet an advantage of some embodiments is that the need for customized setups with third parties for determining missing or ongoing payments for parking is removed.

Yet an advantage of some embodiments is that a learning approach for supporting a user in initiating or stopping payments for a parked vehicle is provided by information obtainment and/or monitoring of operations in a mobile communication device.

Yet an advantage of some embodiments is that a flexible and generic system for supporting a user in initiating or stopping payments for a parked vehicle is provided.

In some embodiments, a likelihood of the one or more apps or the generated operations being related to parking is determined based on the obtained information or the monitored operations at the one or more locations in connection with parking or parking and locking or parking and leaving a vehicle.

An advantage of some embodiments is that the learning approach enables a reliable determination of the likelihood of the one or more apps or the generated operations being related to parking.

In some embodiments, the likelihood of the one or more apps or the generated operations being related to parking is further determined based on a confirmation from the user whether the one or more apps or the operations are related to parking.

An advantage of some embodiments is that the reliability of the learning approach is further complemented with the confirmation.

Yet an advantage of some embodiments is that the reliability of the learning approach reduces erroneous or unnecessary notifications to users for either initiating or stopping payments for parking.

In some embodiments, the confirmation from the user is a one-time confirmation for the one or more locations.

An advantage of some embodiments is that the user experiences the learning approach as user friendly and non-cumbersome.

In some embodiments, the likelihood of the one or more apps or the generated operations being related to parking is further determined based on information associated with the one or more apps.

An advantage of some embodiments is that an automatic confirmation by means of the associated information of the one or more apps further enhances the user friendliness of the learning approach.

In some embodiments, the method further comprises, when the vehicle is parked and it is determined that no user activity indicative of the one or more payments for the parked vehicle is being performed during the one or more time intervals where the one or more payments for the parked vehicle are to be initiated or stopped, notifying the user that the one or more payments for the parked vehicle are to be initiated or stopped.

An advantage of some embodiments is that the user is supported by notifications in initiating or stopping payments for a parked vehicle.

Yet an advantage is that the user is reminded of either initiating or stopping payments for a parked vehicle.

In some embodiments, the one or more apps likely related to parking comprise a vehicle app.

An advantage of some embodiments is that a generic app configured to provide a plurality of services may be utilized for parking payments.

In some embodiments, the operations likely related to parking generated by the user activity in the mobile communication device comprise text messages comprising parking related information.

An advantage of some embodiments is that even basic text messages are comprised in the learning approach which further provides a generic approach for supporting a user in initiating or stopping payments for a parked vehicle.

In some embodiments, the one or more time intervals where the one or more payments for the parked vehicle are to be initiated or stopped comprise any one of a first time interval preceding a parking session, a second time interval corresponding to a duration of the parking session, and a third time interval following the parking session for the parked vehicle.

An advantage of some embodiments is that a plurality of time intervals related to parking are considered to parking payments and thereby reducing a risk for forgetting to initiate or stop payments for a parked vehicle.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for supporting a user in initiating or stopping one or more payments for a parked vehicle at one or more locations.

The apparatus comprises a controller being configured to cause determination of a user activity indicative of the one or more payments for the parked vehicle is being performed during one or more time intervals where the one or more payments for the parked vehicle are to be initiated or stopped by obtainment of information relating to the user activity from one or more apps likely related to parking in a mobile communication device during the one or more time intervals, and/or by monitoring of operations likely related to parking generated by the user activity in the mobile communication device during the one or more time intervals.

An advantage of some embodiments is that alternative approaches for supporting a user in initiating or stopping payments for a parked vehicle are provided.

Yet an advantage is that a user is supported by one or more reminders to initiate, i.e., turn on or start, payments for a parked vehicle.

Yet an advantage of some embodiments is that the need for an API for determining missing or ongoing payments for parking is removed.

Yet an advantage of some embodiments is that the need for customized setups with third parties for determining missing or ongoing payments for parking is removed.

Yet an advantage of some embodiments is that a learning approach for supporting a user in initiating or stopping payments for a parked vehicle is provided by information obtainment and/or monitoring of operations in a mobile communication device.

Yet an advantage of some embodiments is that a flexible and generic system for supporting a user in initiating or stopping payments for a parked vehicle is provided.

In some embodiments, the controller is further configured to cause determination of a likelihood of the one or more apps or the generated operations being related to parking based on the obtained information or the monitored operations at the one or more locations in connection with parking or parking and locking or parking and leaving a vehicle.

An advantage of some embodiments is that the learning approach enables a reliable determination of the likelihood of the one or more apps or the generated operations being related to parking.

In some embodiments, the controller is further configured to cause further determination of the likelihood of the one or more apps or the generated operations being related to parking based on a confirmation from the user whether the one or more apps or the operations are related to parking or based on information associated with the one or more apps.

An advantage of some embodiments is that the reliability of the learning approach is further complemented with the confirmation.

Yet an advantage of some embodiments is that the reliability of the learning approach reduces erroneous or unnecessary notifications to users for either initiating or stopping payments for parking.

In some embodiments, the controller is further configured to cause, when the vehicle is parked and it is determined that no user activity indicative of the one or more payments for the parked vehicle is being performed during the one or more time intervals where the one or more payments for the parked vehicle are to be initiated or stopped, notification to the user that the one or more payments for the parked vehicle are to be initiated or stopped.

An advantage of some embodiments is that the user is supported user in initiating or stopping payments for a parked vehicle.

Yet an advantage is that the user is reminded of either initiating or stopping payments for a parked vehicle.

In some embodiments, the apparatus is operably connectable to memory comprised in the mobile communication device and/or in a cloud environment.

An advantage of some embodiments is that a history of events related to parking which is relevant for the learning approach as learning data may be stored in the memory.

Yet an advantage of some embodiments is that the memory may be scalable in terms of size and enabling the learning approach.

A fourth aspect is a mobile communication device comprising the apparatus according to the third aspect.

An advantage of some embodiments is that the mobile communication device may enable support for the user in initiating or stopping payments for a parked vehicle.

Any of the above aspects may additionally have features identical with or corresponding to any of the various features as explained above for any of the other aspects.

It should be noted that, even if embodiments are described herein in the context of supporting a user in initiating or stopping payments for a parked vehicle, some embodiments may be equally applicable and/or beneficial also in other contexts.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a flowchart illustrating example method steps according to some embodiments;
Figure 3a is a schematic drawing illustrating an example mobile communication device according to some embodiments;
Figure 3b is a schematic drawing illustrating an example user and an example parked vehicle according to some embodiments;
Figure 3c is a schematic drawing illustrating an example user and an example parked vehicle according to some embodiments;
Figure 3d is a schematic drawing illustrating an example map of example parking locations according to some embodiments;
Figure 4 is a schematic block diagram illustrating an example apparatus according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, a first drawback of current approaches for overcoming forgetting to either pay for parking or stop paying for ongoing payment for parking is that an API is required for determining missing or ongoing payments for parking.

Further, as mentioned above, a second drawback of current approaches for overcoming forgetting to either pay for parking or stop paying for ongoing payment for parking is that customized setups with third parties are required for determining missing or ongoing payments for parking.

In the following, embodiments will be presented where alternative approaches for supporting a user in initiating or stopping payments for a parked vehicle are described.

A user, as described herein, typically comprises a user and/or an owner of a vehicle.

Payments, as described herein, typically comprise one or more payment transactions associated with a parking session for a parked vehicle.

Initiating payments, as described herein, typically comprises starting a payment associated with a parking session for a parked vehicle.

Stopping payments, as described herein, typically comprises ending an ongoing payment associated with a parking session for a parked vehicle.

Initiating or stopping payments, as described herein, typically also comprises modifying an ongoing payment associated with a parking session for a parked vehicle.

User activity indicative of payments, as described herein, may typically comprise use of one or more apps or one or more actions generating operations which are determined to be likely related to parking of a vehicle at one or more locations.

Alternatively or additionally, the likelihood that the user activity as described above is related to parking may be determined based on a confirmation from the user or from information associated to the user activity.

It should be noted that, even if embodiments are described herein in the context of supporting a user in initiating or stopping payments for a parked vehicle, some embodiments may be equally applicable and/or beneficial also in other contexts wherein a user is to be supported in payments for a vehicle.

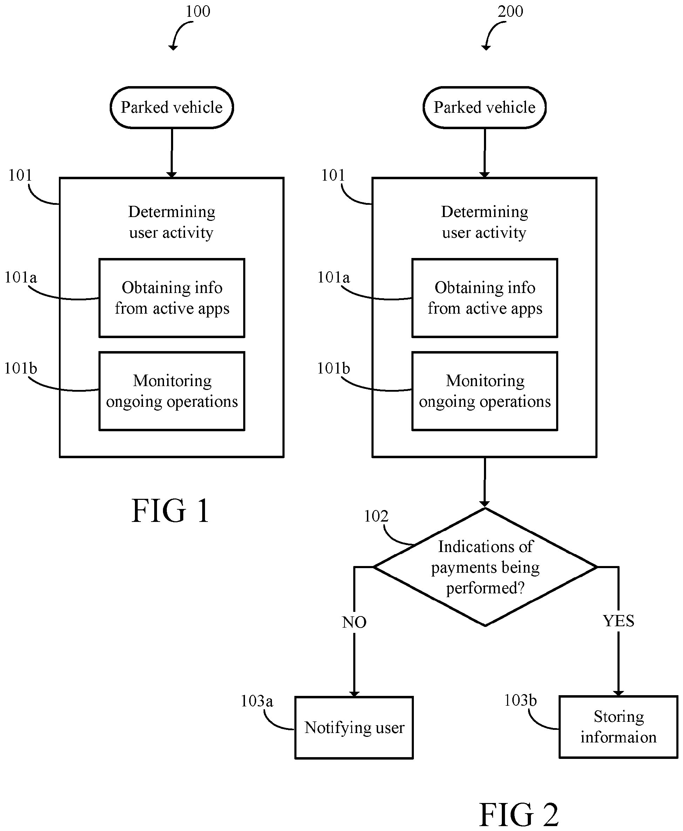

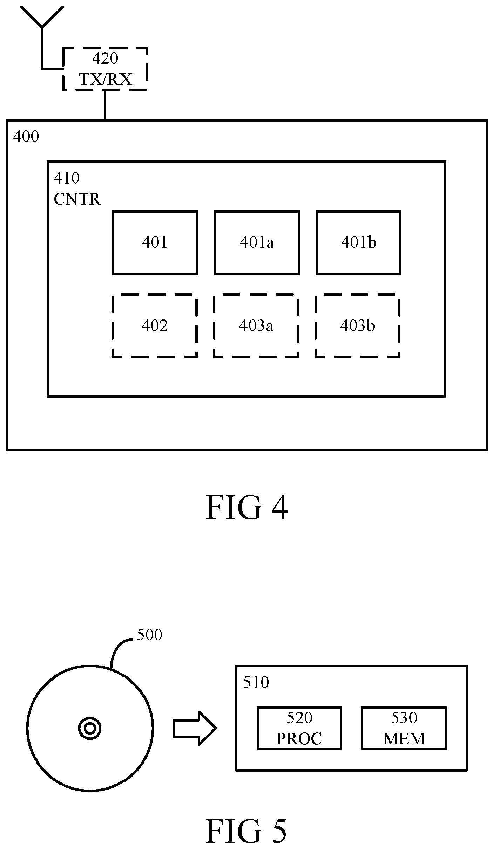

Figure 1 is a flowchart illustrating method steps of an example method 100 according to some embodiments. The method 100 is for supporting a user in initiating or stopping payments for a parked vehicle. Thus, the method 100 may, for example, be performed by the apparatus 400 and/or the controller 410 of Figure 4; all of which will be described later herein.

The method 100 comprises the following steps for when a vehicle is parked.

In step 101, a user activity indicative of one or more payments for the parked vehicle is determined to being performed during one or more time intervals where the one or more payments for the parked vehicle are to be initiated or stopped.

Alternatively or additionally, the user activity indicative of the one or payments for the parked vehicle may be associated to one location.

For example, the user activity may comprise text messaging parking related information, such as license plate number, when parking the vehicle at the golf club.

Alternatively or additionally, the user activity indicative of the one or more payments for the parked vehicle may be associated to two or more locations.

For example, the user activity may comprise picking up a mobile communication device, opening an app, messaging, altering settings in a vehicle app etc.

For example, a same app or text message or setting may be used for parking at several locations.

For example, the user activity may comprise using an app with parking payment functionality when parking the vehicle at the gym and at the office.

For example, the user activity may comprise using parking settings in a vehicle app when parking the vehicle at locations where the parking settings in the vehicle app is considered as a valid payment for parking.

In step 101a, the user activity is determined by obtaining information relating to the user activity from one or more apps likely related to parking in a mobile communication device during the one or more time intervals.

In some embodiments, a likelihood of the one or more apps being related to parking is determined based on the obtained information at the one or more locations in connection with parking or parking and locking or parking and leaving a vehicle.

In some embodiments, the likelihood of the one or more apps being related to parking is further determined based on a confirmation from the user whether the one or more apps are related to parking.

In some embodiments, the confirmation from the user is a one-time confirmation for the one or more locations.

In some embodiments, the likelihood of the one or more apps being related to parking is further determined based on information associated with the one or more apps.

For example, the obtained information relating to the user activity from the one or more apps may comprise information from any one of a parking app, a vehicle app, and a general payment app.

In step 101b, the user activity is determined by monitoring operations likely related to parking generated by the user activity in the mobile communication device during the one or more time intervals.

In some embodiments, a likelihood of the generated operations being related to parking is determined based on the monitored operations at the one or more locations in connection with parking or parking and locking or parking and leaving a vehicle.

In some embodiments, the likelihood of the generated operations being related to parking is further determined based on a confirmation from the user whether the operations are related to parking.

In some embodiments, the confirmation from the user is a one-time confirmation for the one or more locations.

For example, the monitored operations relating to the user activity in the mobile communication device may comprise text messaging comprising parking related information, such as a license plate number.

In some embodiments, the one or more time intervals where the one or more payments for the parked vehicle are to be initiated or stopped comprise any one of a first time interval preceding a parking session, a second time interval corresponding to a duration of the parking session, and a third time interval following the parking session for the parked vehicle.

For example, the first time interval preceding the parking session may be a time interval for initiating one or more payments for the parked vehicle.

For example, the second time interval corresponding to the duration of the parking session may be a time interval for modifying ongoing one or more payments for the parked vehicle.

For example, the third interval following the parking session may be a time interval for stopping ongoing one or more payments for the parked vehicle.

Figure 2 is a flowchart illustrating method steps of an example method 100 according to some embodiments. The method 200 is for supporting a user in initiating or stopping payments for a parked vehicle. Thus, the method 100 may, for example, be performed by the apparatus 400 and/or the controller 410 of Figure 4; all of which will be described later herein.

The method 200 comprises the following steps for when a vehicle is parked.

In step 101, a user activity indicative of one or more payments for the parked vehicle is determined to being performed during one or more time intervals where the one or more payments for the parked vehicle are to be initiated or stopped (corresponding to step 101 of Figure 1).

In step 101a, the user activity is determined by obtaining information relating to the user activity from one or more apps likely related to parking in a mobile communication device during the one or more time intervals (corresponding to step 101a of Figure 1).

In step 101b, the user activity is determined by monitoring operations likely related to parking generated by the user activity in the mobile communication device during the one or more time intervals (corresponding to step 101b of Figure 1).

In optional step 102, in some embodiments, it is determined that no user activity indicative of the one or more payments for the parked vehicle is being performed during the one or more time intervals where the one or more payments for the parked vehicle are to be initiated or stopped (NO-path out of step 102 and proceed to step 103a).

In optional step 103a (NO-path out of step 102), in some embodiments, the user is notified that the one or more payments for the parked vehicle are to be initiated or stopped.

For example, the notification to the user is triggered a certain time, e.g. 5 minutes, after the vehicle is parked and locked/unlocked.

In optional step 102, in some embodiments, it is determined that user activity indicative of the one or more payments for the parked vehicle is being performed during the one or more time intervals where the one or more payments for the parked vehicle are to be initiated or stopped (YES-path out of step 102 and proceed to step 103b).

In optional step 103b (YES-path out of step 102), in some embodiments, information of the user activity indicative of the one or more payments for the parked vehicle are stored in a memory.

For example, the stored information of the user activity may comprise information about time stamps, type of operation, recipient of text messages, app identity, app category, relation between apps etc.

Alternatively or additionally, the stored information may comprise a history of parking payments in a memory.

For example, the history of parking payments may comprises time stamps corresponding to each parking payment.

Alternatively or additionally, the memory is comprised partially or completely in a mobile communication device.

Alternatively or additionally, the memory is partially comprised in a mobile communication device and partially in a cloud environment.

Alternatively or additionally, the memory is completely comprised in a cloud environment.

For example, the stored information of the user activity at one or more locations of a parked vehicle may serve as learning data for a learning approach, wherein the learning approach enables a learning of patterns of user behaviour in relation to parking.

For example, the learning approach enables a self-contained system wherein APIs and customized setups with third parties are avoided while still supporting the user in initiating or stopping one or more payments for a parked vehicle at one or more locations.

Alternatively or additionally, a neural network may be implemented for the learning approach wherein information from one or more apps, or generated operations in a mobile communication device may provide learning data, i.e. training data, for the neural network. Further, a one-time confirmation from the user or information associated to the one or more apps may in addition provide further reliability of the learning data for the purpose of training the neural network.

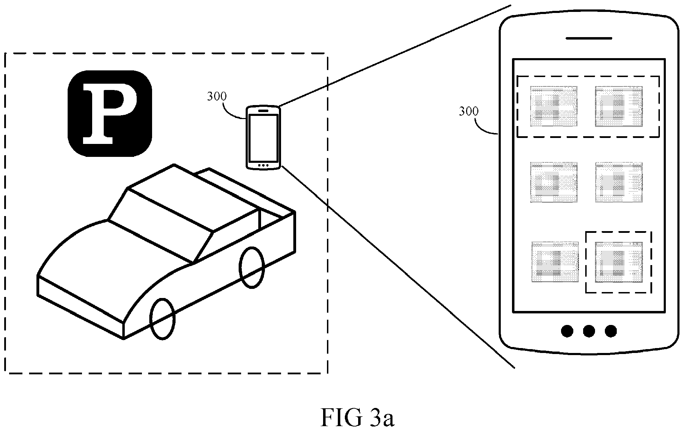

Figure 3a is a schematic drawing illustrating an example mobile communication device 300 according to some embodiments. The mobile communication device 300 is for supporting a user in initiating or stopping payments for a parked vehicle. Thus, the mobile communication device 300 may, for example, be configured to perform one or more of the method steps of Figure 1 and/or Figure 2 and/or be configured to partially or completely comprise the apparatus 400 and/or the controller 410 of Figure 4; all of which will be described later herein.

It should be noted that the mobile communication device 300 may be operably connected to memory comprised in a processor of the mobile communication device 300 and/or a memory in a cloud environment.

In an embodiment, a user parks a vehicle at a location on a regular basis, e.g. a golf course. While the user walks away from the parked vehicle, after it is locked, the user always opens an app in the mobile communication device 300 called "GolfPay" developed by a minor third party. Opening of this app is determined to be a user activity indicative of one or more payments as the user confirms the first time the app is used in connection with parking a vehicle at a location and activating the app in the mobile communication device 300 that the app is an app related to parking.

Hence, monitoring the use of the app is continued as the app has been confirmed to be related to parking.

In an embodiment, a user parks a vehicle at a location nearby a statue where there is a popular "Pokemon GO" avatar located. The user frequently parks in this location, opens the "Pokemon GO" app in the mobile communication device 300. Opening of this app is determined to be a user activity not indicative of one or more payments as the user confirms the first time the app is used in connection with parking a vehicle at a location and activating the app in the mobile communication device 300 that the app is an app not related to parking.

Hence, monitoring the use of the app is discontinued as the app has been confirmed to not be related to parking.

In an embodiment, a user parks a vehicle at a first location and opens a confirmed parking app. The same user parks the vehicle at a second location and opens the same confirmed parking app. Even though the first and second locations are different but as the same confirmed parking app is used it may be assumed to be a user activity indicative of one or more payments for a parked vehicle.

Hence, monitoring the use of the app is continued also for the second location as the app has been confirmed to be related to parking for the first location.

In an embodiment, a user parks a vehicle at a location not previously visited. The user locks the vehicle and walks away from the parked vehicle without picking up the mobile communication device 300. The lack of interaction with the mobile communication device 300 is determined to not be a user activity indicative of one or more payments for a parked vehicle. The user thereby receives a notification as a reminderto perform a payment for parking. In the event the location does not require payment for parking the user may ignore the notification and classify the location as payment free whereby the user will not receive further notifications for this location.

Hence, monitoring user behavior for the specific location is discontinued as the location has been confirmed to not be associated with a payment for parking.

In an embodiment, a user parks a vehicle at a location at 11:00. The doors of the vehicle are closed, the vehicle is locked, and the user starts walking away from the parked vehicle. Monitoring of user activity indicative of one or more payments is ongoing in the mobile communication device 300. The user takes up the mobile communication device 300 and starts an app "Parking" which is closed after 2 minutes (i.e., user activity indicative of one or more payments for a time interval preceding a parking session). The user then takes up the mobile communication device 300 again at 12:00 while the app "Parking" is active and places a call in another active app "Phone", and thereafter checks Facebook (i.e., user activity not indicative of one or more payments). The user then starts walking towards the parked vehicle. Monitoring of user activity indicative of one or more payments is still ongoing in the mobile communication device 300. The user takes up the mobile communication device 300, and starts the app "Parking" which is closed after 1 minute (i.e., user activity indicative of one or more payments for a time interval following a parking session). The parked vehicle is unlocked and the user drives away. Alternatively, the user unlocks the vehicle and then starts the app "Parking" and thereafter drives away.

Alternatively or additionally, the use of the app "Parking" at arrival as well at departure may be a further indicator of a likelihood that the app "Parking" is related to parking.

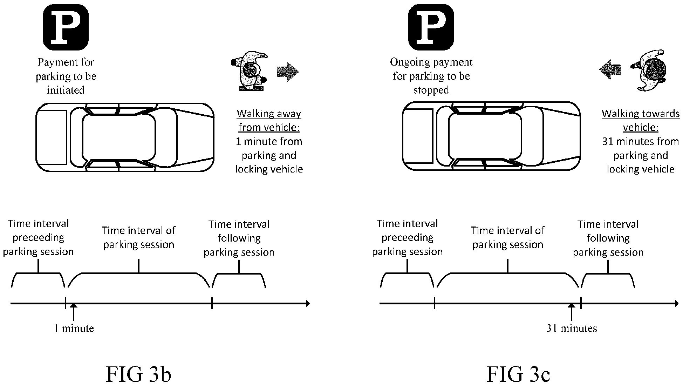

Figure 3b is a schematic drawing illustrating a user walking away from a parked vehicle according to some embodiments.

A user has parked and locks the vehicle while he is walking away from the vehicle. The parking and locking of the vehicle are indicative of a start of a parking session, i.e. a time interval of a parking session. As the user continues walking away from the vehicle, 1 minute from the start of the parking session, the user initiates payment for parking by taking up the mobile communication device 300 and using an app previously confirmed to be related to parking. The imitated payment corresponds to the time interval of the parking session.

Hence, no notification is needed for reminding the user to start payment for the parking session as the user has performed user activity steps indicative of payment being started during the parking session.

Figure 3c is a schematic drawing illustrating a user walking towards a parked vehicle according to some embodiments.

A user has parked the vehicle and unlocks the vehicle while she is walking towards the vehicle. The unlocking of the parked vehicle is indicative of a stop of a parking session, i.e. a time interval of a parking session. As the user continues walking towards the vehicle, 31 minutes from the start of the parking session, the user stops payment for parking by taking up the mobile communication device 300 and using an app previously confirmed to be related to parking. The stopped payment corresponds to the time interval of the parking session.

Hence, no notification is needed for reminding the user to stop payment for the parking session as the user has performed user activity steps indicative of payment being stopped during the parking session.

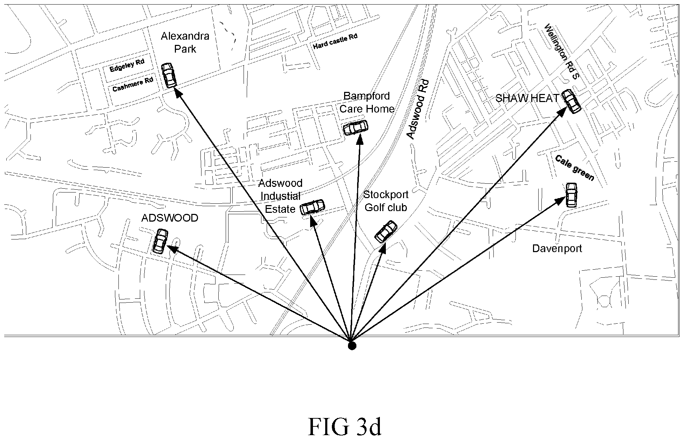

Figure 3d is a schematic drawing illustrating a map of parking locations associated to a user according to some embodiments.

The map illustrates several locations where a user has parked a vehicle during a time period, e.g. a month. The locations are marked in the map as parking locations since one or more payments for the parked vehicle have been initiated or stopped in these locations. Furthermore, the one or more payments have been preceded by user activity indicative of the one or more payments for the parked vehicle, wherein the user activity has been performed during one or more time intervals where the one or more payments for the parked vehicle were to be initiated or stopped.

Alternatively or additionally, the parking locations are determined to be actual parking locations based on road sign recognition (i.e. detection of a sign "P" with add-on-sign "Fee").

For example, the user activity comprises use of one or more apps likely related to parking in the mobile communication device 300 during the one or more time intervals.

For example, the user activity comprises operations likely related to parking generated by the user activity in the mobile communication device 300, e.g. text messaging information about the vehicle (license plate), during the one or more time intervals.

Alternatively or additionally, information about the parking locations may be stored in a remote server and serve as learning data for a learning approach, wherein the learning approach enables a learning of patterns of user behaviour in relation to parking.

Alternatively or additionally, information about the use of one or more apps, or generated operations in the mobile communication device 300 in relation to parking the vehicle at the parking locations may also be stored in the remote server and serve as additional learning data, i.e. training data. As both parking location information and information from the one or more apps or generated operations are stored associated to each other, a reliable learning approach is enabled.

Figure 4 is a schematic block diagram illustrating an example apparatus 400 according to some embodiments. The apparatus 400 is for supporting a user in initiating or stopping payments for a parked vehicle. Thus, the apparatus 400 and/or the controller 410 may, for example, be configured to perform one or more of the method steps of Figure 1 and/or Figure 2, and/or one or more of any steps otherwise described herein.

The apparatus 400 is for supporting a user in initiating or stopping one or more payments for a parked vehicle at one or more locations.

The apparatus 400 comprises a controller 410, e.g. device controlling circuitry, configured to cause determination of a user activity indicative of the one or more payments for the parked vehicle is being performed during one or more time intervals where the one or more payments for the parked vehicle are to be initiated or stopped.

The controller 410 is further configured to cause the determination of the user activity by obtainment of information relating to the user activity from one or more apps likely related to parking in a mobile communication device during the one or more time intervals, and/or monitoring of operations likely related to parking generated by the user activity in the mobile communication device during the one or more time intervals.

The apparatus 400 comprises, as mentioned above, the controller (CNTR; e.g., control circuitry or a controlling module) 410, which may in turn comprise, (or be otherwise associated with; e.g., connected or connectable to), a determiner 401, e.g. determining circuitry or determining module, configured to determine that a user activity indicative of the one or more payments for the parked vehicle is being performed during one or more time intervals where the one or more payments for the parked vehicle are to be initiated or stopped (compare with step 101 of Figure 1).

The controller 410 further comprises, (or is otherwise associated with; e.g., connected or connectable to), an obtainer 401a, e.g. obtaining circuitry or obtaining module, configured to obtain information relating to the user activity from one or more apps likely related to parking in a mobile communication device during the one or more time intervals (compare with step 101a of Figure 1).

The controller 410 further comprises, (or is otherwise associated with; e.g., connected or connectable to), a monitorer 401b, e.g. monitoring circuitry or monitoring module, configured to monitor operations likely related to parking generated by the user activity in the mobile communication device during the one or more time intervals (compare with step 101b of Figure 1).

The controller 410 further comprises, (or is otherwise associated with; e.g., connected or connectable to), a determiner 402, e.g. determining circuitry or determining module, configured to determine whether user activity indicative of the one or more payments for the parked vehicle is being performed during the one or more time intervals where the one or more payments for the parked vehicle are to be initiated or stopped (compare with step 102 of Figure 1).

The controller 410 further comprises, (or is otherwise associated with; e.g., connected or connectable to), a notifier 403a, e.g. notifying circuitry or notifying module, configured to the user that the one or more payments for the parked vehicle are to be initiated or stopped (compare with step 103a of Figure 1).

The controller 410 further comprises, (or is otherwise associated with; e.g., connected or connectable to), a storer 403b, e.g. storing circuitry or storing module, configured to store information of the user activity indicative of the one or more payments for the parked vehicle (compare with step 103b of Figure 1).

In some embodiments, the controller 410 is further configured to cause determination of a likelihood of the one or more apps or the generated operations being related to parking based on the obtained information or the monitored operations at the one or more locations in connection with parking or parking and locking or parking and leaving a vehicle.

In some embodiments, the controller 410 is further configured to cause further determination of the likelihood of the one or more apps or the generated operations being related to parking based on a confirmation from the user whether the one or more apps or the operations are related to parking or based on information associated with the one or more apps.

In some embodiments, the apparatus 400 is operably connectable to memory comprised in a mobile communication device and/or in a cloud environment.

In some embodiments, the mobile communication device, e.g. as described in Figure 3, comprises the apparatus 400.

The apparatus 400 may further optionally comprise, (or be otherwise associated with; e.g., connected or connectable to), in some embodiments, a transceiver TX/RX 420, e.g. transceiving circuitry or transceiving module, configured to transmit and receive radio signals e.g. in accordance with supporting a user in initiating or stopping one or more payments for a parked vehicle at one or more locations.

Generally, when an apparatus is referred to herein, it is to be understood as a physical product. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), Graphics Processing Units (GPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM).

Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 510. When loaded into the data processor, the computer program may be stored in a memory (MEM) 530 associated with or comprised in the data processor.

In some embodiments, the computer program may, when loaded into and run by the data processing unit, cause execution of method steps according to, for example, Figure 1 and/or one or more of any steps otherwise described herein.

In some embodiments, the computer program may, when loaded into and run by the data processing unit, cause execution of steps according to, for example, Figure 1 and/or Figure 2 and/or one or more of any steps otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for supporting a user in initiating or stopping one or more payments for a parked vehicle at one or more locations, the method comprising the steps of:
determining (101) that a user activity indicative of the one or more payments for the parked vehicle is being performed during one or more time intervals where the one or more payments for the parked vehicle are to be initiated or stopped by:
obtaining (101a) information relating to the user activity from one or more apps likely related to parking in a mobile communication device during the one or more time intervals, and/or
monitoring (101b) operations likely related to parking generated by the user activity in the mobile communication device during the one or more time intervals.

2. The method according to claim 1, wherein a likelihood of the one or more apps or the generated operations being related to parking is determined based on the obtained information or the monitored operations at the one or more locations in connection with parking or parking and locking or parking and leaving a vehicle.

3. The method according to any of claims 1-2, wherein the likelihood of the one or more apps or the generated operations being related to parking is further determined based on a confirmation from the user whether the one or more apps or the operations are related to parking.

4. The method according to claim 3, wherein the confirmation from the user is a one-time confirmation for the one or more locations.

5. The method according to any of claims 1-4, wherein the likelihood of the one or more apps or the generated operations being related to parking is further determined based on information associated with the one or more apps.

6. The method according to any of claims 1-5, the method further comprising the step of:
when the vehicle is parked and it is determined that no user activity indicative of the one or more payments for the parked vehicle is being performed during the one or more time intervals where the one or more payments for the parked vehicle are to be initiated or stopped:
notifying (103) the user that the one or more payments for the parked vehicle are to be initiated or stopped.

7. The method according to any of claims 1-6, wherein the one or more apps likely related to parking comprise a vehicle app.

8. The method according to any of claims 1-7, wherein the operations likely related to parking generated by the user activity in the mobile communication device comprise text messages comprising parking related information.

9. The method according to any of claims 1-8, wherein the one or more time intervals where the one or more payments for the parked vehicle are to be initiated or stopped comprise any one of a first time interval preceding a parking session, a second time interval corresponding to a duration of the parking session, and a third time interval following the parking session for the parked vehicle.

10. A computer program product comprising a non-transitory computer readable medium, having thereon a computer program comprising program instructions, the computer program being loadable into a data processing unit and configured to cause execution of the method according to any of claims 1 through 9 when the computer program is run by the data processing unit.

11. An apparatus for supporting a user in initiating or stopping one or more payments for a parked vehicle at one or more locations, the apparatus comprising a controller (410) configured to cause:
determination of a user activity indicative of the one or more payments for the parked vehicle is being performed during one or more time intervals where the one or more payments for the parked vehicle are to be initiated or stopped by:
obtainment of information relating to the user activity from one or more apps likely related to parking in a mobile communication device during the one or more time intervals, and/or
monitoring of operations likely related to parking generated by the user activity in the mobile communication device during the one or more time intervals.

12. The apparatus according to claim 11, the controller (410) being further configured to cause:
determination of a likelihood of the one or more apps or the generated operations being related to parking based on the obtained information or the monitored operations at the one or more locations in connection with parking or parking and locking or parking and leaving a vehicle.

13. The apparatus according to any of claims 11-12, the controller (410) being further configured to cause:
further determination of the likelihood of the one or more apps or the generated operations being related to parking based on a confirmation from the user whether the one or more apps or the operations are related to parking or based on information associated with the one or more apps.

14. The apparatus according to any of claims 11-13, the controller (410) being further configured to cause:
when the vehicle is parked and it is determined that no user activity indicative of the one or more payments for the parked vehicle is being performed during the one or more time intervals where the one or more payments for the parked vehicle are to be initiated or stopped:
notification to the user that the one or more payments for the parked vehicle are to be initiated or stopped.

15. The apparatus according to any of claims 11-14, the apparatus being operably connectable to memory comprised in the mobile communication device and/or in a cloud environment.

16. A mobile communication device comprising the apparatus according to any of claims 11-15.
